# EUROPÄISCHE PATENTSCHRIFT

(11) **EP 2 591 024 B1**
(45) Veröffentlichungstag und Bekanntmachung des Hinweises auf die Patenterteilung: **25.06.2014**
(21) Anmeldenummer: 11728892.8
(22) Anmeldetag: 05.07.2011
(51) Int. Cl.: C08F 220/26, C08F 8/14, C08F 210/02, C10M 145/14, C10L 10/14

(54) **COPOLYMERISAT MIT HOHER CHEMISCHER EINHEITLICHKEIT UND SEINE VERWENDUNG ZUR VERBESSERUNG DER KALTFLIEßEIGENSCHAFTEN VON BRENNSTOFFÖLEN**
COPOLYMER HAVING HIGH CHEMICAL UNIFORMITY AND USE THEREOF FOR IMPROVING COLD FLOW PROPERTIES OF FUEL OILS
COPOLYMÈRE À HOMOGÉNÉITÉ CHIMIQUE ÉLEVÉE ET SON UTILISATION POUR L'AMÉLIORATION DE L'ÉCOULEMENT À FROID D'HUILES COMBUSTIBLES

(30) Priorität: 06.07.2010 EP 10168557
(43) Veröffentlichungstag der Anmeldung: 15.05.2013
(73) Patentinhaber: BASF SE, 67056 Ludwigshafen (DE)
(72) Erfinder: MÄHLING, Frank-Olaf, 68165 Mannheim (DE); STRITTMATTER, Jan, 68163 Mannheim (DE); TRÖTSCH-SCHALLER, Irene, 67281 Bissersheim (DE); GARCIA CASTRO, Ivette, 67067 Ludwigshafen (DE); SCHROERS, Michael, 67098 Bad Dürkheim (DE); REBHOLZ, Uwe, 67678 Mehlingen (DE)
(86) Internationale Anmeldenummer: PCT/EP2011/061275
(87) Internationale Veröffentlichungsnummer: WO 2012/004240

(56) Entgegenhaltungen:
- WO-A1-2008/059055
- DE-A1- 1 923 454

## Beschreibung

Die vorliegende Erfindung betrifft ein Copolymerisat mit hoher chemischer Einheitlichkeit, bestehend aus
(A) 50 bis 30 Gew.-% Ethylen,
(B) 50 bis 70 Gew.-% eines C₄- bis C₂₄-Hydrocarbylesters der Acrylsäure oder Methacrylsäure oder einer Mischung solcher Hydrocarbylester,
(C) 0 bis 5 Gew.-% Acrylsäure und/oder Methacrylsäure und
(D) 0 bis 10 Gew.-% eines oder mehrerer copolymerisierbarer Monomere,
wobei alle Monomerkomponenten im Copolymerisat zusammen 100 Gew.-% ergeben,
welches erhältlich ist durch Polymerisation einer Mischung aus 80 bis 60 Gew.-% Ethylen, 20 bis 40 Gew.-% Acrylsäure und/oder Methacrylsäure und 0 bis 10 Gew.-% eines oder mehrerer copolymerisierbarer Monomere, wobei alle Monomerkomponenten in der Mischung zusammen 100 Gew.-% ergeben, in einer rückvermischenden, kontinuierlich betriebenen Polymerisationsapparatur und anschließende polymeranaloge Veresterung des erhaltenen Copolymerisates aus Ethylen und (Meth)acrylsäure oder aus im wesentlichen Ethylen und (Meth)acrylsäure mit einem C₄- bis C₂₄-Hydrocarbinol oder einer Mischung von C₄- bis C₂₄-Hydrocarbinolen.

Weiterhin betrifft die vorliegende Erfindung ein Verfahren zur Herstellung dieses Copolymerisates mit hoher chemischer Einheitlichkeit.

Weiterhin betrifft die vorliegende Erfindung die Verwendung dieses Terpolymerisates zur Verbesserung der Kaltfließeigenschaften von Brennstoffölen, zur Absenkung der unteren Einmischtemperatur von Kaltfließverbesserer-Additiven in Brennstofföle und zur Verbesserung der Filtrierbarkeit von Kaltfließverbesserer-Additiven enthaltenden Brennstoffölen.

Mitteldestillat-Kraftstoffe aus fossilem Ursprung, insbesondere Gasöle, Dieselöle oder leichte Heizöle, die aus Erdöl gewonnen werden, haben je nach Herkunft des Rohöls unterschiedliche Gehalte an Paraffinen. Bei tiefen Temperaturen kommt es am Trübungspunkt oder Cloud Point ("CP") zur Ausscheidung fester Paraffine. Bei weiterer Abkühlung bilden die plättchenförmigen n-Paraffinkristalle eine Art von "Kartenhausstruktur" und der Mitteldestillat-Kraftstoff stockt, obwohl sein überwiegender Teil noch flüssig ist. Durch die ausgefallenen n-Paraffine im Temperaturbereich zwischen Trübungspunkt (Cloud Point) und Pour Point ("PP") wird die Fließfähigkeit der Mitteldestillat-Kraftstoffe erheblich beeinträchtigt; die Paraffine verstopfen Filter und verursachen eine ungleichmäßige oder völlig unterbrochene Kraftstoffzufuhr zu den Verbrennungsaggregaten. Ähnliche Störungen treten bei leichten Heizölen auf.

Es ist seit langem bekannt, dass durch geeignete Zusätze das Kristallwachstum der n-Paraffine in Mitteldestillat-Kraftstoffen modifiziert werden kann. Gut wirksame Additive verhindern, dass Mitteldestillat-Kraftstoffe bei Temperaturen wenige Grade Celsius unterhalb der Temperatur, bei welcher die ersten Paraffinkristalle auskristallisieren, bereits fest werden. Statt dessen werden feine, gut kristallisierende, separate Paraffinkristalle gebildet, welche auch bei weiterer Absenkung der Temperatur Filter in Kraftfahrzeugen und Heizungsanlagen passieren oder zumindest einen für den flüssigen Teil der Mitteldestillate durchlässigen Filterkuchen bilden, so dass ein störungsfreier Betrieb sichergestellt ist. Die Wirksamkeit der Fließverbesserer wird üblicherweise nach der europäischen Norm EN 116 indirekt durch Messung des Cold Filter Plugging Point ("CFPP") ausgedrückt. Als derartige Kaltfließverbesserer oder Middle Distillate Flow Improvers ("MDFI") werden beispielsweise schon seit langem Ethylen-Vinylcarboxylat-Copolymere wie Ethylen-Vinylacetat-Copolymere ("EVA") eingesetzt.

Die Problematik beim Kaltfließverhalten stellt sich bei Biobrennstoffölen (""Biodiesel") und Mischungen aus Mitteldestillat-Kraftstoffen und Biobrennstoffölen ähnlich dar. Hier können zur Verbesserung des Kaltfließverhaltens im Prinzip die gleichen Additive wie bei reinen Mitteldestillat-Kraftstoffen eingesetzt werden.

Ein Nachteil dieser Additive beim Einsatz in Mitteldestillat-Kraftstoffen liegt darin, dass die derart modifizierten Paraffinkristalle aufgrund ihrer gegenüber dem flüssigen Teil höheren Dichte dazu neigen, sich beim Lagern des Mitteldestillat-Kraftstoffes mehr und mehr am Boden des Behälters abzusetzen. Dadurch bildet sich im oberen Behälterteil eine homogene paraffinarme Phase und am Boden eine zweiphasige paraffinreiche Schicht. Da sowohl in den Fahrzeugtanks als auch in Lager- oder Liefertanks der Mineralölhändler der Abzug des Kraftstoffes meist wenig oberhalb des Behälterbodens erfolgt, besteht die Gefahr, dass die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge mit sinkender Temperatur zunimmt. Insbesondere verstärken auch Anteile an Biodiesel diese unerwünschte Neigung des Mitteldestillat-Kraftstoffes zur Paraffinsedimentation. Durch den zusätzlichen Einsatz von Paraffindispergatoren oder Wax Anti-Settling Additiven ("WASA") können die geschilderten Probleme verringert werden.

Aus der WO 2008/059055 sind Terpolymerisate aus Ethylen, Vinylacetat und längerkettigen (Meth)acrylestern, beispielsweise 2-Propylheptylacrylat, als Kaltfließverbesserer für Brennstofföle bekannt.

Neben den oben genannten Ethylen-Vinylcarboxylat-Copolymeren werden im Stand der Technik auch Ethylen-(Meth)acrylester-Copolymere als Kaltfließverbesserer für Mitteldestillat-Kraftstoffe und Biobrennstofföle empfohlen. Beispielsweise werden in der DE 10 2006 022 720 A1 Copolymere aus 18 bis 35 Mol-% eines oder mehrerer Vinyl- und/oder (Meth)acrylester und 65 bis 82 Gew.-% Ethylen als Additiv zur Verbesserung der Kaltfließeigenschaften von Brennstoffölen tierischen oder pflanzlichen Ursprungs beschrieben. Als Acryl- bzw. Methacrylester-Komponente werden die C₁- bis C₂₀-Alkylester der Acryl- und Methacrylsäure wie Methyl(meth)acrylat, Ethyl(meth)acrylat, Propyl(meth)acrylat, n- und iso-Butyl(meth)acrylat, Hexyl-, Octyl-, 2-Ethylhexyl-, Decyl-, Dodecyl-, Tetradecyl-, Hexadecal- und Octadecyl(meth)acrylat hervorgehoben.

Es bestand die Aufgabe, Produkte mit hoher chemischer Einheitlichkeit zur Verfügung zu stellen, welche durch ihre hohe chemische Einheitlichkeit ein sehr gutes Kälteverhalten bei Brennstoffölen bewirken. Insbesondere sollte der PP-Wert für diese Brennstofföle effektiv abgesenkt werden. Gleichzeitig sollte durch diese Produkte aufgrund ihrer hohen chemischen Einheitlichkeit auch die unteren Einmischtemperatur von Kaltfließverbesserer-Additiven in Brennstofföle abgesenkt und die Filtrierbarkeit von Kaltfließverbesserer-Additiven enthaltenden Brennstoffölen verbessert werden.

Die Aufgabe wird erfindungsgemäß durch das eingangs genannte Copolymerisat mit hoher chemischer Einheitlichkeit aus den Komponenten (A), (B), (C) und (D) gelöst.

Zur Charakterisierung der "hohen chemischen Einheitlichkeit" des erfindungsgemäßen Copolymerisates sollte hier die Konstanz der Werte aus den Säurezahl-Bestimmungen für verschiedene Copolymer-Fraktionen mit unterschiedlichen Polymerkettenlängen, welche durch fraktioniertes Ausfällen beim Abkühlen einer Lösung des erfindungsgemäßen Copolymerisates erhalten werden, herangezogen werden. Unter die Definition eines erfindungsgemäßen Copolymerisates mit "hoher chemischer Einheitlichkeit" sollen im Sinne der vorliegenden Erfindung üblicherweise alle diejenigen Copolymerisate fallen, die beim Abkühlen einer durch Erwärmen auf 60°C hergestellten 20 gew.-%igen Lösung des Copolymerisates aus den Komponenten (A), (B), (C) und (D) in der angegebenen Zusammensetzung in einer Mischung aus den Lösungsmitteln Decan und Ethylbenzol im Gew.-Verhältnis 1:1 auf jeweils +10°C, 0°C und -10°C Fällungen ergeben, welche - zusammen mit dem von den Lösungsmitteln befreiten Rückstand aus der Mutterlauge der letzten Fällung - nach Abfiltration und Entfernung der Lösungsmittel in insgesamt 4 Fraktionen resultieren, deren jeweilige einzelne Säurezahlen sich alle im Wertebereich von ± 15 %, insbesondere ± 10 %, vor allem ± 5 %, des arithmetischen Mittels aller 4 bestimmten Säurezahlen bewegen. Die Säurezahlen werden hierbei wie üblich titrimetrisch in mg KOH / g Copolymer bestimmt.

Als bevorzugte C₄- bis C₂₄-Hydrocarbinole eignen sich insbesondere C₄- bis C₂₄-Alkanole, insbesondere C₈- bis C₁₈-Alkanole, vor allem C₁₀- bis C₁₅-Alkanole, sowie auch C₇- bis C₂₄-Arylalkanole und C₅- bis C₈-Cycloalkanole.

Vorzugsweise ist das erfindungsgemäße Copolymerisat aus
(A) 45 bis 35 Gew.-%, insbesondere 42 bis 38 Gew.-% Ethylen,
(B) 55 bis 65 Gew.-%, insbesondere 58 bis 62 Gew.-% eines C₄- bis C₂₄-Hydro-carbylesters der Acrylsäure oder Methacrylsäure oder einer Mischung solcher Hydrocarbylester,
(C) 0 bis 3,5 Gew.-%, insbesondere 0 bis 2 Gew.-% Acrylsäure und/oder Methacrylsäure und
(D) 0 bis 5 Gew.-%, insbesondere 0 bis 2,5 Gew.-% eines oder mehrerer copolymerisierbarer Monomere
aufgebaut.

Als C₄- bis C₂₄-Hydrocarbylester der Acrylsäure oder Methacrylsäure für die Komponente (B) eignen sich vorzugsweise die Alkylester der Acrylsäure oder Methacrylsäure, insbesondere die Ester der Acryl- und Methacrylsäure mit C₈- bis C₁₈-Alkanolen, insbesondere C₁₀- bis C₁₅-Alkanolen, beispielsweise mit n-Butanol, sec.-Butanol, Isobutanol, tert.-Butanol, n-Pentanol, tert.-Pentanol, n-Hexanol, n-Heptanol, n-Octanol, 2-Ethylhexanol, n-Nonanol, Isononanol, n-Decanol, 2-Propylheptanol, n-Undecanol, n-Dodecanol, n-Tridecanol, Isotridecanol, n-Tetradecanol, n-Pentadecanol, n-Hexadecanol, n-Heptadecanol, n-Octadecanol und n-Eicosanol, sowie weiterhin auch die Ester der Acryl- und Methacrylsäure mit C₇- bis C₂₄-Arylalkanolen und mit C₅- bis C₈-Cycloalkanolen, beispielsweise mit 1- oder 2-Phenoxyethanol, Cyclopentanol und Cyclohexanol. Ein Mindestkettenlänge von 4, insbesondere von 8, vor allem von 10 Kohlenstoffatomen im Falle von Alkanolen ist für das Löslichkeitsverhalten des erfindungsgemäßen Copolymerisates in den Brennstoffölen notwendig.

Das erfindungsgemäße Copolymerisat kann auch zwei oder mehr Species der genannten C₄- bis C₂₄-Hydrocarbylester der Acrylsäure oder Methacrylsäure als Komponente (B) einpolymerisiert enthalten.

In einer bevorzugten Ausführungsform enthält das erfindungsgemäße Copolymerisat als Komponente (B) einen C₈- bis C₁₈-Alkylesters der Acrylsäure oder Methacrylsäure oder einer Mischung solcher Alkylester.

Das erfindungsgemäße Copolymerisat ist durch Polymerisation einer Mischung aus 80 bis 60 Gew.-% Ethylen, 20 bis 40 Gew.-% Acrylsäure und/oder Methacrylsäure und 0 bis 10 Gew.-% eines oder mehrerer copolymerisierbarer Monomere, wobei alle Monomerkomponenten in der Mischung zusammen 100 Gew.-% ergeben, in einer rückvermischenden, kontinuierlich betriebenen Polymerisationsapparatur und anschließende polymeranaloge Veresterung des erhaltenen Copolymerisates aus Ethylen und (Meth)-acrylsäure oder aus im wesentlichen Ethylen und (Meth)acrylsäure mit einem C₄- bis C₂₄-Hydrocarbinol oder einer Mischung von C₄- bis C₂₄-Hydrocarbinolen erhältlich. Der Polymerisationsschritt wird normalerweise gemäß den üblichen Hochdruckpolymerisationstechniken bei einem Druck von 50 bis 5000 bar, insbesondere 1000 bis 2500 bar, vor allem 500 bis 2000 bar, typischerweise 1600 bis 1800 bar, durchgeführt. Man arbeitet hierbei in der Regel bei Temperaturen von 50 bis 450°C, insbesondere 100 bis 350°C, vor allem 150 bis 250°C, typischerweise 200 bis 240°C. Als Polymerisationsapparatur wird vorzugsweise ein rückvermischender, kontinuierlich betriebener Autoklav verwendet. In der Regel wird die Polymerisation durch radikalisch zerfallende Initiatoren gestartet, hierzu eignen sich Luft oder Sauerstoff, gegebenenfalls in Anwesenheit von zusätzlich dosierten organischen Peroxiden und/oder Hydroperoxiden. Als organische Peroxide bzw. Hydroperoxide kommen beispielsweise Diisopropylbenzolhydroperoxid, Cumolhydroperoxid, Methylisobutylketonperoxid, Di-tert.-butylperoxid und tert.-Butylperiiso-nonat in Betracht. Weiterhin können geeignete Regler wie aliphatische Aldehyde bei der Polymerisation mitverwendet werden.

Der gewünschte relativ niedrige Gew.-Anteil an Ethylen im erfindungsgemäßen Copolymerisat ergibt sich dadurch, dass man von einem leicht polymerisierbaren Monomerengemisch ausgehend, in dem der Ethylen-Anteil gegenüber dem (Meth)acrylsäure-Anteil überwiegt, und den Gew.-Anteil der von (Meth)acrylsäure abgeleiteten Einheit im Polymerisat durch anschließende polymeranaloge Veresterung der Carboxylgruppen im Polymerisat mit einem oder mehreren C₄- bis C₂₄-Hydrocarbinolen stark erhöht. Dieser Weg ist auch deshalb günstig, weil eine direkte Polymerisation von Ethylen mit C₄-bis C₂₄-Hydrocarbylestern der Acrylsäure oder Methacrylsäure nur schwer steuerbar ist. Nur über diesen Wege erhält man Copolymerisate aus Ethylen und (Meth)acrylsäure oder aus im wesentlichen Ethylen und (Meth)acrylsäure mit der gewünschten hohen chemischen Einheitlichkeit. Da die Veresterung der zweiten Reaktionsstufe unvollständig verlaufen kann, kann das erfindungsgemäße Copolymerisat bis 5 Gew.-% an nicht veresterten (Meth)acrylsäure-Einheiten enthalten.

Als gewünschtenfalls mitzuverwendende Monomere (D) eignen sich insbesondere organische Moleküle mit einer oder mehreren polymerisationsfähigen Vinylgruppen, beispielsweise Vinylacetat, Vinylpropionat, Vinylbutanoat, Vinylpentanoat, Vinylhexanoat, Vinyl-2-ethylhexanoat, Vinyloctanoat, Vinylester der Neodecansäure ("Veova"), Vinyldecanoat, Vinyldodecanoat, Vinyltridecanoat, Vinylisotridecanoat, Vinyltetradecanoat, Vinylpentadecanoat, Vinylhexadecanoat und Vinyloctadecanoat sowie weiterhin auch Vinylphosphorsäureester wie Vinylphosphorsäureesterdimethylester oder Vinylphosphorsäureesterdiethylester oder Vinylsilan (H₂C=CH-SiH₃). Auch Vinylether wie Cyclo-hexylvinylether, Isopropylvinylether, Isobutylvinylether, tert.-Butylvinylether, n-Butylvinylether, Octylvinylether, Decylvinylether, Dodecylvinylether, Tetradecylvinylether, Hexadecylvinylether und Octadecylvinylether sind hier geeignet.

Der polymeranaloge Veresterungschritt der zweiten Reaktionsstufe wird nach üblichen Veresterungstechniken durchgeführt. Vorzugsweise arbeitet man hierbei mit sauren Veresterungskatalysatoren wie Methansulfonsäure, para-Toluolsulfonsäure, Trifluoressigsäure, Schwefelsäure oder Chlorwasserstoff. Das Austreiben des entstehenden Reaktionswassers erfolgt üblicherweise mittels Durchleiten von Inertgas wie Stickstoff bei erhöhten Temperaturen, insbesondere bei 120 bis 200°C.

Das erfindungsgemäße Copolymerisat weist vorzugsweise ein zahlenmittleres Molekulargewicht (Mₙ) im Bereich von 1000 bis 10.000, insbesondere von 1500 bis 3500, oder alternativ ein gewichtsmittleres Molekulargewicht von 2000 bis 20.000, insbesondere von 3000 bis 7000, auf (jeweils bestimmt durch Gelpermeationschromatographie).

Gegenstand der vorliegende Erfindung ist auch ein Verfahren zur Herstellung eines Copolymerisates mit hoher chemischer Einheitlichkeit, bestehend aus
(A) 50 bis 30 Gew.-% Ethylen,
(B) 50 bis 70 Gew.-% eines C₄- bis C₂₄-Hydrocarbylesters der Acrylsäure oder Me thacrylsäure oder einer Mischung solcher Hydrocarbylester,
(C) 0 bis 5 Gew.-% Acrylsäure und/oder Methacrylsäure und
(D) 0 bis 10 Gew.-% eines oder mehrerer copolymerisierbarer Monomere,
wobei alle Monomerkomponenten im Copolymerisat zusammen 100 Gew.-% ergeben,
welches dadurch gekennzeichnet ist, dass man eine Mischung aus 80 bis 60 Gew.-% Ethylen, 20 bis 40 Gew.-% Acrylsäure oder Methacrylsäure und 0 bis 10 Gew.-% eines oder mehrerer copolymerisierbarer Monomere, wobei alle Monomerkomponenten in der Mischung zusammen 100 Gew.-% ergeben, in einer rückvermischenden, kontinuierlich betriebenen Polymerisationsapparatur, insbesondere in einem rückvermischenden, kontinuierlich betriebenen Autoklaven, polymerisiert, wobei vorzugsweise bei einem Druck von 50 bis 5000 bar gearbeitet wird, und anschließende eine polymeranaloge Veresterung des erhaltenen Copolymerisates aus Ethylen und (Meth)acrylsäure oder aus im wesentlichen Ethylen und (Meth)acrylsäure mit einem C₄- bis C₂₄-Hydrocarbinol oder einer Mischung von C₄- bis C₂₄-Hydrocarbinolen durchführt.

Das erfindungsgemäße Copolymerisat dient als neuer effizienter Kaltfließverbesserer in Brennstoffölen. Unter Brennstoffölen sollen im Rahmen der vorliegenden Erfindung Mitteldestillat-Kraftstoffe aus fossilem, pflanzlichem oder tierischem Ursprung, Biobrennstofföle (""Biodiesel") und Mischungen als solchen Mitteldestillat-Kraftstoffen und Biobrennstoffölen verstanden werden.

Mit Mitteldestillat-Kraftstoffen (nachfolgend auch kurz "Mitteldestillate" genannt) werden insbesondere Kraft- und Brennstoffe bezeichnet, die durch Destillation von Rohöl als erstem Verfahrensschritt gewonnen werden und im Bereich von 120 bis 450°C sieden. Solche Mitteldestillat-Kraftstoffe werden insbesondere als Dieselkraftstoff, Heizöl oder Kerosin verwendet, wobei Dieselkraftstoff und Heizöl besonders bevorzugt sind. Vorzugsweise werden schwefelarme Mitteldestillate verwendet, d.h. solche, die weniger als 350 ppm Schwefel, insbesondere weniger als 200 ppm Schwefel, vor allem weniger als 50 ppm Schwefel enthalten. In speziellen Fällen enthalten sie weniger als 10 ppm Schwefel, diese Mitteldestillate werden auch als "schwefelfrei" bezeichnet. Es handelt sich dabei im allgemeinen um Rohöldestillate, die einer hydrierenden Raffination unterworfen wurden, und daher nur geringe Anteile an polyaromatischen und polaren Verbindungen enthalten. Vorzugsweise handelt es sich um solche Mitteldestillate, die 90%-Destillationspunkte unter 370°C, insbesondere unter 360°C und in Spezialfällen unter 330°C aufweisen.

Schwefelarme und schwefelfreie Mitteldestillate können auch aus schwereren Erdölfraktionen gewonnen werden, die nicht mehr unter Atmosphärendruck destilliert werden können. Als typische Konversionsverfahren zur Herstellung von Mitteldestillaten aus schweren Erdölfraktionen seien genannt: Hydrocracken, thermisches Cracken, katalytisches Cracken, Cokerprozesse und/oder Visbreaking. Je nach Verfahrensdurchführung fallen diese Mitteldestillate schwefelarm oder schwefelfrei an oder werden einer hydrierenden Raffination unterworfen.

Vorzugsweise haben die Mitteldestillate Aromatengehalte von unter 28 Gew.-%, insbesondere unter 20 Gew.-%. Der Gehalt an Normalparaffinen beträgt zwischen 5% und 50 Gew.-%, vorzugsweise liegt er zwischen 10 und 35 Gew.%.

Im Sinne der vorliegenden Erfindung sollen hier unter Mitteldestillat-Kraftstoffen auch solche Kraft- oder Brennstoffe verstanden werden, welche sich entweder indirekt von fossilen Quellen wie Erdöl oder Erdgas ableiten lassen oder aber aus Biomasse über Vergasung und anschließende Hydrierung hergestellt werden. Ein typisches Beispiel für einen sich indirekt von fossilen Quellen ableitenden Mitteldestillat-Kraftstoff ist der mittels Fischer-Tropsch-Synthese erzeugte GTL("gas-to-liquid")-Dieselkraftstoff. Aus Biomasse wird beispielweise über den BTL("biomass-to-liquid")-Prozess ein Mitteldestillat hergestellt, das entweder allein oder in Mischung mit anderen Mitteldestillaten als Kraft- oder Brennstoff verwendet werden kann. Zu den Mitteldestillaten gehören auch Kohlenwasserstoffe, die durch Hydrierung von Fetten und Fettölen gewonnen werden. Sie enthalten überwiegend n-Paraffine.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Das erfindungsgemäße Copolymerisat kann neben seiner Verwendung in den genannten Mitteldestillat-Kraftstoffen aus fossilem, pflanzlichem oder tierischem Ursprung, die im wesentlichen Kohlenwasserstoffmischungen darstellen, auch in Biobrennstoffölen und in Mischungen aus den genannten Mitteldestillaten mit Biobrennstoffölen zur Verbesserung des Kaltfließverhaltens eingesetzt werden. Derartige Mischungen sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Das erfindungsgemäße Copolymerisat bewirkt eine deutliche Verbesserung des Kaltfließverhaltens des Brennstofföls, d.h. eine Absenkung insbesondere der PP-Werte, aber auch der CP-Werte und/oder der CFPP-Werte, weitgehend unabhängig von der Herkunft oder der Zusammensetzung des Brennstofföles. Ausgeschiedene Paraffinkristalle und Kristalle von Fettsäureestern werden in der Regel wirksamer in der Schwebe gehalten, so dass es nicht zu Verstopfungen von Filtern und Leitungen durch solche Sedimente kommt. Das erfindungsgemäße Copolymerisat weist in den meisten Fällen eine gute Breitenwirkung auf und bewirkt so, dass die ausgeschiedenen Kristalle in den unterschiedlichsten Brennstoffölen sehr gut dispergiert werden.

Das erfindungsgemäße Copolymerisat bewirkt weiterhin eine Absenkung der unteren Einmischtemperatur von Kaltfließverbesserer-Additiven in Brennstofföle. Aufgrund ihrer chemischen Struktur müssen Kaltfließverbesserer-Additive häufig bei einer bestimmten erhöhten Mindesttemperatur den Raffinerieströmen zugesetzt werden, um das Zupumpen und die vollständige Auflösung im Brennstofföl und dessen Homogenisierung zu ermöglichen. Diese - auch als untere Einmischtemperatur definierte - Größe sollte möglichst niedrig sein, um ein kostenintensives Heizen der Kaltfließverbesser-Lagertanks in den Raffinerien zu vermeiden.

Das erfindungsgemäße Copolymerisat bewirkt weiterhin eine Verbesserung der Filtrierbarkeit von Kaltfließverbesserer-Additiven enthaltenden Brennstoffölen. Die Anwesenheit von Additiven des Standes der Technik führt nämlich in vielen Fällen zu einer Verschlechterung der Filtrierbarkeit von Brennstoffölen, wodurch die Anwendbarkeit und die maximale Dosierrate der Additive eingeschränkt wird.

Ebenso können durch die Verwendung des erfindungsgemäßen Copolymerisates neben der Verbesserung der Kaltfließeigenschaften von Brennstoffölen und des Handlings mit Kaltfließverbesserer-Additiven bzw. mit Kaltfließverbesserer-Additiven enthaltenden Brennstoffölen eine Reihe weitere Brennstofföleigenschaften verbessert werden. Exemplarisch sollen hier nur die zusätzliche Wirkung als Korrosionsschutz oder die Verbesserung der Oxidationsstabilität genannt werden.

Gegenstand der vorliegenden Erfindung sind auch Brennstofföle, welche 10 bis 5000 Gew.-ppm, insbesondere 25 bis 1500 Gew.-ppm, vor allem 50 bis 750 Gew.-ppm, des erfindungsgemäßen Copolymerisates enthalten.

Die genannten Brennstofföle können als weitere Zusätze in hierfür üblichen Mengen noch weitere Kaltfließverbesserer, Paraffindispergatoren, Leitfähigkeitsverbesserer, Korrosionsschutzadditive, Lubricity-Additive, Antioxidantien, Metall-Deaktivatoren, Antischaummittel, Demulgatoren, Detergentien, Cetanzahl-Verbesserer, Lösungs- oder Verdünnungsmittel, Farbstoffe oder Duftstoffe oder Gemische davon enthalten. Weitere Kaltfließverbesserer sind beispielsweise in der WO 2008/113757 A1 beschrieben. Die übrigen vorstehend genannten weiteren Zusätze sind im übrigen dem Fachmann geläufig und brauchen deshalb hier nicht weiter erläutert zu werden.

Die nachfolgenden Beispiele sollen die vorliegende Erfindung erläutern, ohne sie zu beschränken.

### Beispiele

### Verwendete Kraftstoffe:

Zur Demonstration der Effektivität des erfindungsgemäßen Copolymerisates als Additiv in Biobrennstoffölen wurden zwei handelsübliche typische Biodiesel-Qualitäten (Prüföle B1, B2 und B3) mit folgenden Eigenschaften verwendet:

| B1: | Typ: | RME |
|---|---|---|
| | Herkunft: | Perstorp Schweden |
| | CP (DIN EN 23015): | -4,0°C |
| | CFPP (DIN EN 116) | -11°C |
| | PP (ASTM D 97) | -12°C |
| | Dichte bei 15°C (EN ISO 1285): | 882,8 kg/m³ |
| | | |

| B2: | Typ: | FAME |
|---|---|---|
| | Herkunft: | Rossi Biofuel |
| | CP (DIN EN 23015): | -3,8°C |
| | CFPP (DIN EN 116) | -9°C |
| | PP (ASTM D 97) | -6°C |
| | Dichte bei 15°C (EN ISO 1285): | 883,0 kg/m³ |
| | | |

| B3: | Typ: | RME |
|---|---|---|
| | Herkunft: | handelsüblicher schwedischer Biodiesel |
| | CP (DIN EN 23015): | -5,0°C |
| | CFPP (DIN EN 116) | -11°C |
| | PP (ASTM D 97) | -12°C |
| | Dichte bei 15°C (EN ISO 1285): | 883,1 kg/m³ |

### Verwendete Additive:

Die verwendeten Ter- bzw. Copolymerisate können wie folgt charakterisiert werden, wobei T-1 (gemäß WO 2008/059055, handelsübliches Produkt) zum Vergleich und T-2 erfindungsgemäß eingesetzt wurden:

| | | |
|---|---|---|
| T-1: | Zusammensetzung: | 60,0 Gew.-% Ethylen |
| | | 22,5 Gew.-% Vinylacetat |
| | | 17,5 Gew.-% 2-Propylheptylacrylat |
| | Molekulargewichte: Mₙ = 3000 g/mol, M_{w} = 7300 g/mol | |
| | Viskosität: 170 mPas bei 120°C | |
| | | |
| T-2: | Zusammensetzung: | 40,1 Gew.-% Ethylen |
| | | 58,7 Gew.-% Tridecylmethacrylat |
| | | 1,2 Gew.-% Methacrylsäure |
| | Molekulargewichte: Mₙ = 3000 g/mol, M_{w} = 7000 g/mol | |
| | Viskosität: < 30 mPas bei 120°C | |
| | hergestellt durch Hochdruckpolymerisation eines Monomerengemisches aus 70,0 Gew.-% Ethylen und 30,0 Gew.-% Methacrylsäure bei 220°C und 1707 bar und anschließende Veresterung mit überschüssigem Tridecanol (Mol-Verhältnis Methacrylsäure-Einheiten zu Tridecanol: 1 : 1,2) in Gegenwart von Methansulfonsäure | |

### Beispiel 1: Bestimmung des Kälteverhaltens

Die nachfolgende Tabelle 1 mit den mittels eines genormten Meßverfahrens bestimmten Pour Points ("PP") zeigt, dass die Wirkung des erfindungsgemäßen Terpolymerisates (T-2) signifikant besser ist als die vergleichbarer Polymere des Standes der Technik (T-1).

**Tabelle 1: Bestimmung der PP-Werte [°C]**

| | Prüföl | B1 | B2 | B3 |
|---|---|---|---|---|
| | Dosiermenge * | 900 ppm | 900 ppm | 500 ppm |
| Additiv T-1 | | -15 | -18 | -12 |
| Additiv T-2 | | -38 | -36 | -39 |

| | | | | |
|---|---|---|---|---|
| * Die Polymere T-1 und T-2 wurden jeweils als konzentrierte Lösung in einem üblichen Lösungsmittel zudosiert. Die jeweils angegebene Dosiermenge bezieht sich auf den Polymergehalt der Lösung. | | | | |

## Patentansprüche

1. Copolymerisat mit hoher chemischer Einheitlichkeit, bestehend aus
(A) 50 bis 30 Gew.-% Ethylen,
(B) 50 bis 70 Gew.-% eines C₄- bis C₂₄-Hydrocarbylesters der Acrylsäure oder Methacrylsäure oder einer Mischung solcher Hydrocarbylester,
(C) 0 bis 5 Gew.-% Acrylsäure und/oder Methacrylsäure und
(D) 0 bis 10 Gew.-% eines oder mehrerer copolymerisierbarer Monomere,
wobei alle Monomerkomponenten im Copolymerisat zusammen 100 Gew.-% ergeben,
erhältlich durch Polymerisation einer Mischung aus 80 bis 60 Gew.-% Ethylen, 20 bis 40 Gew.-% Acrylsäure und/oder Methacrylsäure und 0 bis 10 Gew.-% eines oder mehrerer copolymerisierbarer Monomere, wobei alle Monomerkomponenten in der Mischung zusammen 100 Gew.-% ergeben, in einer rückvermischenden, kontinuierlich betriebenen Polymerisationsapparatur und anschließende polymeranaloge Veresterung des erhaltenen Copolymerisates aus Ethylen und (Meth)acryl-säure oder aus im wesentlichen Ethylen und (Meth)acrylsäure mit einem C₄- bis C₂₄-Hydrocarbinol oder einer Mischung von C₄- bis C₂₄-Hydrocarbinolen.

2. Copolymerisat mit hoher chemischer Einheitlichkeit nach Anspruch 1, erhältlich durch Polymerisation bei einem Druck von 50 bis 5000 bar.

3. Copolymerisat mit hoher chemischer Einheitlichkeit nach Anspruch 1 oder 2, bestehend aus
(A) 45 bis 35 Gew.-%, insbesondere 42 bis 38 Gew.-% Ethylen,
(B) 55 bis 65 Gew.-%, insbesondere 58 bis 62 Gew.-% eines C₄- bis C₂₄-Hydrocarbylesters der Acrylsäure oder Methacrylsäure oder einer Mischung solcher Hydrocarbylester,
(C) 0 bis 3,5 Gew.-%, insbesondere 0 bis 2 Gew.-% Acrylsäure und/oder Methacrylsäure und
(D) 0 bis 5 Gew.-%, insbesondere 0 bis 2,5 Gew.-% eines oder mehrerer copolymerisierbarer Monomere.

4. Copolymerisat mit hoher chemischer Einheitlichkeit nach den Ansprüchen 1 bis 3, welches als Komponente (B) einen C₈- bis C₁₈-Alkylesters der Acrylsäure oder Methacrylsäure oder einer Mischung solcher Alkylester enthält.

5. Copolymerisat nach den Ansprüchen 1 bis 4 mit einem zahlenmittleren Molekulargewicht im Bereich von 1000 bis 10.000, insbesondere von 1500 bis 3500, oder mit einem gewichtsmittleren Molekulargewicht von 2000 bis 20.000, insbesondere von 3000 bis 7000.

6. Verfahren zur Herstellung eines Copolymerisates mit hoher chemischer Einheitlichkeit, bestehend aus
(A) 50 bis 30 Gew.-% Ethylen,
(B) 50 bis 70 Gew.-% eines C₄- bis C₂₄-Hydrocarbylesters der Acrylsäure oder Methacrylsäure oder einer Mischung solcher Hydrocarbylester,
(C) 0 bis 5 Gew.-% Acrylsäure und/oder Methacrylsäure und
(D) 0 bis 10 Gew.-% eines oder mehrerer copolymerisierbarer Monomere,
wobei alle Monomerkomponenten im Copolymerisat zusammen 100 Gew.-% ergeben,
**dadurch gekennzeichnet, dass** man eine Mischung aus 80 bis 60 Gew.-% Ethylen, 20 bis 40 Gew.-% Acrylsäure und/oder Methacrylsäure und 0 bis 10 Gew.-% eines oder mehrerer copolymerisierbarer Monomere, wobei alle Monomerkomponenten in der Mischung zusammen 100 Gew.-% ergeben, in einer rückvermischenden, kontinuierlich betriebenen Polymerisationsapparatur polymerisiert und anschließende eine polymeranaloge Veresterung des erhaltenen Copolymerisates aus Ethylen und (Meth)acrylsäure oder aus im wesentlichen Ethylen und (Meth)acryl-säure mit einem C₄- bis C₂₄-Hydrocarbinol oder einer Mischung von C₄- bis C₂₄-Hydrocarbinolen durchführt.

7. Verfahren nach Anspruch 6, **dadurch gekennzeichnet, dass** man bei einem Druck von 50 bis 5000 bar polymerisiert.

8. Verfahren nach Anspruch 6 oder 7, **dadurch gekennzeichnet, dass** man die Mischung aus 80 bis 60 Gew.-% Ethylen, 20 bis 40 Gew.-% Acrylsäure und/oder Methacrylsäure und 0 bis 10 Gew.-% eines oder mehrerer copolymerisierbarer Monomere in einem rückvermischenden, kontinuierlich betriebenen Autoklaven polymerisiert.

9. Brennstofföle enthaltend 10 bis 5000 Gew.-ppm eines Copolymerisates gemäß den Ansprüchen 1 bis 8.

10. Verwendung eines Copolymerisates gemäß den Ansprüchen 1 bis 8 zur Verbesserung der Kaltfließeigenschaften von Brennstoffölen.

11. Verwendung eines Copolymerisates gemäß den Ansprüchen 1 bis 8 zur Absenkung der unteren Einmischtemperatur von Kaltfließverbesserer-Additiven in Brennstofföle.

12. Verwendung eines Copolymerisates gemäß den Ansprüchen 1 bis 8 zur Verbesserung der Filtrierbarkeit von Kaltfließverbesserer-Additiven enthaltenden Brennstoffölen.

## Claims

1. A copolymer with high chemical homogeneity, consisting of
(A) 50 to 30% by weight of ethylene,
(B) 50 to 70% by weight of a C₄- to C₂₄-hydrocarbyl ester of acrylic acid or methacrylic acid, or of a mixture of such hydrocarbyl esters,
(C) 0 to 5% by weight of acrylic acid and/or methacrylic acid and
(D) 0 to 10% by weight of one or more copolymerizable monomers,
where all monomer components in the copolymer together add up to 100% by weight,
obtainable by polymerizing a mixture of 80 to 60% by weight of ethylene, 20 to 40% by weight of acrylic acid and/or methacrylic acid and 0 to 10% by weight of one or more copolymerizable monomers, where all monomer components in the mixture together add up to 100% by weight, in a backmixing, continuous polymerization apparatus, and subsequently polymer-analogously esterifying the resulting copolymer of ethylene and (meth)acrylic acid or of essentially ethylene and (meth)acrylic acid with a C₄- to C₂₄-hydrocarbinol or a mixture of C₄- to C₂₄-hydrocarbinols.

2. A copolymer with high chemical homogeneity according to claim 1, obtainable by polymerizing at a pressure of 50 to 5000 bar.

3. A copolymer with high chemical homogeneity according to claim 1 or 2, consisting of
(A) 45 to 35% by weight, especially 42 to 38% by weight, of ethylene,
(B) 55 to 65% by weight, especially 58 to 62% by weight, of a C₄- to C₂₄-hydrocarbyl ester of acrylic acid or methacrylic acid, or of a mixture of such hydrocarbyl esters,
(C) 0 to 3.5% by weight, especially 0 to 2% by weight; of acrylic acid and/or methacrylic acid and
(D) 0 to 5% by weight, especially 0 to 2.5% by weight, of one or more copolymerizable monomers.

4. A copolymer with high chemical homogeneity according to claims 1 to 3, which comprises, as component (B), a C₈- to C₁₈-alkyl ester of acrylic acid or methacrylic acid or of a mixture of such alkyl esters.

5. A copolymer according to claims 1 to 4, having a number-average molecular weight in the range from 1000 to 10 000, especially from 1500 to 3500, or having a weight-average molecular weight of 2000 to 20 000, especially of 3000 to 7000.

6. A process for preparing a copolymer with high chemical homogeneity, consisting of
(A) 50 to 30% by weight of ethylene,
(B) 50 to 70% by weight of a C₄- to C₂₄-hydrocarbyl ester of acrylic acid or methacrylic acid, or of a mixture of such hydrocarbyl esters,
(C) 0 to 5% by weight of acrylic acid and/or methacrylic acid and
(D) 0 to 10% by weight of one or more copolymerizable monomers,
where all monomer components in the copolymer together add up to 100% by weight,
which comprises polymerizing a mixture of 80 to 60% by weight of ethylene, 20 to 40% by weight of acrylic acid and/or methacrylic acid and 0 to 10% by weight of one or more copolymerizable monomers, where all monomer components in the mixture together add up to 100% by weight, in a backmixing, continuous polymerization apparatus, and subsequently polymer-analogously esterifying the resulting copolymer of ethylene and (meth)acrylic acid or of essentially ethylene and (meth)acrylic acid with a C₄- to C₂₄-hydrocarbinol or a mixture of C₄- to C₂₄-hydrocarbinols.

7. The process according to claim 6, wherein polymerization is effected at a pressure of 50 to 5000 bar.

8. The process according to claim 6 or 7, wherein the mixture of 80 to 60% by weight of ethylene, 20 to 40% by weight of acrylic acid and/or methacrylic acid and 0 to 10% by weight of one or more copolymerizable monomers is polymerized in a backmixing, continuous autoclave.

9. A fuel oil comprising 10 to 5000 ppm by weight of a copolymer according to claims 1 to 8.

10. The use of a copolymer according to claims 1 to 8 for improving the cold flow properties of fuel oils.

11. The use of a copolymer according to claims 1 to 8 for lowering the lower mixing temperature of cold flow improver additives into fuel oils.

12. The use of a copolymer according to claims 1 to 8 for improving the filterability of fuel oils comprising cold flow improver additives.

## Revendications

1. Copolymère présentant une uniformité chimique élevée, constitué par
(A) 50 à 30% en poids d'éthylène,
(B) 50 à 70% en poids d'un ester de C₄-C₂₄-hydrocarbyle de l'acide acrylique ou de l'acide méthacrylique ou d'un mélange de ces esters d'hydrocarbyle,
(C) 0 à 5% en poids d'acide acrylique et/ou d'acide méthacrylique et
(D) 0 à 10% en poids d'un ou de plusieurs monomères copolymérisables,
la somme de tous les composants monomères dans le copolymère valant 100% en poids, pouvant être obtenu par polymérisation d'un mélange constitué par 80 à 60% en poids d'éthylène, 20 à 40% en poids d'acide acrylique et/ou d'acide méthacrylique et 0 à 10% en poids d'un ou de plusieurs monomères copolymérisables, la somme de tous les composants monomères dans le mélange valant 100% en poids, dans un appareil de polymérisation à mélange en retour, exploité en continu et par estérification, analogue à un polymère, consécutive du copolymère obtenu à partir d'éthylène et d'acide (méth)acrylique ou sensiblement obtenu à partir d'éthylène et d'acide (méth)acrylique avec un C₄-C₂₄-hydrocarbinol ou un mélange de C₄-C₂₄-hydrocarbinols.

2. Copolymère présentant une uniformité chimique élevée selon la revendication 1, pouvant être obtenu par polymérisation à une pression de 50 à 5000 bars.

3. Copolymère présentant une uniformité chimique élevée selon la revendication 1 ou 2, constitué par
(A) 45 à 35% en poids, en particulier 42 à 38% en poids éthylène,
(B) 55 à 65% en poids, en particulier 58 à 62% en poids, d'un ester de C₄-C₂₄-hydrocarbyle de l'acide acrylique ou de l'acide méthacrylique ou d'un mélange de ces esters d'hydrocarbyle,
(C) 0 à 3,5% en poids, en particulier 0 à 2% en poids, d'acide acrylique et/ou d'acide méthacrylique et
(D) 0 à 5% en poids, en particulier 0 à 2,5% en poids d'un ou de plusieurs monomères copolymérisables.

4. Copolymère présentant une uniformité chimique élevée selon les revendications 1 à 3, qui contient, comme composant (B), un ester C₈-C₁₈-alkylique de l'acide acrylique ou méthacrylique ou un mélange de ces esters alkyliques.

5. Copolymère selon les revendications 1 à 4 présentant un poids moléculaire numérique moyen dans la plage de 1000 à 10 000, en particulier de 1500 à 3500, ou présentant un poids moléculaire pondéral moyen de 2000 à 20 000, en particulier de 3000 à 7000.

6. Procédé pour la préparation d'un copolymère présentant une uniformité chimique élevée, constitué par
(A) 50 à 30% en poids d'éthylène,
(B) 50 à 70% en poids d'un ester de C₄-C₂₄-hydrocarbyle de l'acide acrylique ou de l'acide méthacrylique ou d'un mélange de ces esters d'hydrocarbyle,
(C) 0 à 5% en poids d'acide acrylique et/ou d'acide méthacrylique et
(D) 0 à 10% en poids d'un ou de plusieurs monomères copolymérisables,
la somme de tous les composants monomères dans le copolymère valant 100% en poids, **caractérisé en ce qu'**on polymérise un mélange constitué par 80 à 60% en poids d'éthylène, 20 à 40% en poids d'acide acrylique et/ou d'acide méthacrylique et 0 à 10% en poids d'un ou de plusieurs monomères copolymérisables, la somme de tous les composants monomères dans le mélange valant 100% en poids, dans un appareil de polymérisation à mélange en retour, exploité en continu et on effectue ensuite une estérification, analogue à un polymère, du copolymère obtenu à partir d'éthylène et d'acide (méth)acrylique ou sensiblement obtenu à partir d'éthylène et d'acide (méth)acrylique avec un C₄-C₂₄-hydrocarbinol ou un mélange de C₄-C₂₄-hydrocarbinols.

7. Procédé selon la revendication 6, **caractérisé en ce qu'**on polymérise à une pression de 50 à 5000 bars.

8. Procédé selon la revendication 6 ou 7, **caractérisé en ce qu'**on polymérise le mélange constitué par 80 à 60% en poids d'éthylène, 20 à 40% en poids d'acide acrylique et/ou d'acide méthacrylique et 0 à 10% en poids d'un ou de plusieurs monomères copolymérisables dans un autoclave à mélange en retour, exploité en continu.

9. Huile combustible contenant 10 à 5000 ppm en poids d'un copolymère selon les revendications 1 à 8.

10. Utilisation d'un copolymère selon les revendications 1 à 8 pour améliorer les propriétés d'écoulement à froid d'huiles combustibles.

11. Utilisation d'un copolymère selon les revendications 1 à 8 pour abaisser la température d'incorporation inférieure d'additifs d'amélioration de l'écoulement à froid dans les huiles combustibles.

12. Utilisation d'un copolymère selon les revendications 1 à 8 pour améliorer la filtrabilité d'huiles combustibles contenant des additifs d'amélioration de l'écoulement à froid.
